# EUROPÄISCHE PATENTSCHRIFT

(11) **EP 3 239 604 B1**
(45) Veröffentlichungstag und Bekanntmachung des Hinweises auf die Patenterteilung: **20.06.2018**
(21) Anmeldenummer: 17167684.4
(22) Anmeldetag: 24.04.2017
(51) Int. Cl.: F21V 21/096, H01R 12/00, F21Y 115/10, F21Y 103/10

(54) **SCHALTSCHRANKLEUCHTE MIT LEUCHTMITTELN AUF DER BASIS VON LICHTEMITTIERENDEN DIODEN**
CONTROL CABINET LIGHT WITH ILLUMINATING MEANS BASED ON LIGHT EMITTING DIODES
ÉCLAIRAGE D'ARMOIRE ÉLECTRIQUE À L'AIDE DE DIODES ÉLECTROLUMINESCENTES

(30) Priorität: 27.04.2016 DE 202016002732 U
(43) Veröffentlichungstag der Anmeldung: 01.11.2017
(73) Patentinhaber: Seifert Systems Ltd., 3000 Birzebbuga (MT)
(72) Erfinder: SEIFERT, Michael, Triq il Madliena (MT)
(74) Vertreter: Kruspig, Volkmar

(56) Entgegenhaltungen:
- EP-A1- 2 048 749
- EP-A2- 0 392 578
- WO-A2-00/16442
- CN-A- 105 387 375

## Beschreibung

Die Erfindung betrifft eine Schaltschrankleuchte mit Leuchtmitteln auf der Basis von lichtemittierenden Dioden, bestehend aus einem langgestreckten Leuchtengehäuse mit Gehäusegrundkörper und lichtdurchlässiger Abdeckung sowie elektrischen Anschlusselementen und am Leuchtengehäuse vorgesehenen Mitteln zur universellen Befestigung gemäß Oberbegriff des Anspruchs 1.

Schaltschrankleuchten auf der Basis von lichtemittierenden Dioden gehören zum Stand der Technik. Auf LED-Basis betriebene Leuchten sind im Vergleich zu Leuchtstoffröhren energiesparend, leicht, robust und langlebig. Schaltschrankleuchten sind mit entsprechenden Schaltmitteln versehen und können mit einer Netzsteckdose ausgerüstet sein. Bekannt sind darüber hinaus Varianten mit Bewegungsmelder oder Türendschalter. Über steckbare Verbindungskabel lassen sich mehrere LED-Leuchten miteinander verbinden.

Bezüglich der Beleuchtung von Schaltschränken mit Lichtquellen auf LED-Basis sei beispielsweise auf die DE 10 2009 004 062 A1 verwiesen. Die dort beschriebene transportable Lichtquelle kann grundsätzlich batterie- oder akkubetrieben werden. Auch kann im jeweiligen Schaltschrank eine Stromversorgung vorhanden sein, an der die Lichtquelle anzuschließen ist. Um die Lichtquelle an verschiedenen Stellen im Schaltschrank anzuordnen, ist ein Permanentmagnet vorhanden, um ein Befestigen der Leuchte an metallischen Komponenten des Schaltschranks zu ermöglichen.

Bei der Schaltschrankleuchte nach DE 201 09 396 U1 ist ein Leuchtengehäuse mit Befestigungsvorrichtungen zur Herstellung einer Verbindung zum Schaltschrank nebst Leuchtmittel und eine Steckverbindung an der Leuchte vorgesehen. Das dortige Leuchtengehäuse weist in einem mittleren Bereich mindestens das Leuchtmittel und in zwei äußeren Bereichen die Befestigungs- und/oder Bedienelemente auf.

Eine Schaltschrankleuchte für einen netzunabhängigen Betrieb ist in der DE 200 16 067 U1 beschrieben. In einem dort erläuterten abnehmbaren und freibeweglichen Leuchtenkörper ist ein Energiespeicher, z.B. in Form eines Akkumulators eingesetzt, um den gewünschten netzunabhängigen Betrieb zu gewährleisten. Darüber hinaus ist im Leuchtenhaltesockel ein Ladegerät mit Ladezustandsregelung befindlich.
Bei der Schaltschrankleuchte mit Leuchtmittel auf der Basis von lichtemittierenden Dioden nach EP 1 670 107 B1 ist das Leuchtengehäuse beispielsweise über hakenförmige Rastmittel in einer Montagelochung eines Profilabschnitts im Leuchtengehäuse einsetzbar. Alternativ können die Seitenflächen des Gehäuses der Leuchte Befestigungslochungen zum Durchführen von Schrauben aufweisen, mittels derer die Leuchte an der vorerwähnten Profilleiste befestigbar ist. Ebenso besteht die Möglichkeit, dass das Gehäuse mittels Magneten an mindestens einem Profilabschnitt fixiert ist.
Um eine besonders gleichmäßige Ausleuchtung eines Schaltschranks zu gewährleisten, ist nach EP 1 670 107 B1 vorgeschlagen, mehrere Leuchten innerhalb eines Schaltschranks anzuordnen und in Reihe zu schalten. Hierfür wird auf entsprechende Steckverbindungen verwiesen, um die Leuchten elektrisch zu verbinden. Bei einer Ausführungsform können ein integrierter Bewegungsmelder und/oder eine Steckdose am Leuchtenkörper angeordnet werden. Die im Oberbegriff von Anspruch 1 offenbarte Schaltschrankleuchte ist aus CN 105387375 A bekannt. Aus dem Vorgenannten ist es daher Aufgabe der Erfindung, eine weiterentwickelte Schaltschrankleuchte mit Leuchtmitteln auf der Basis von lichtemittierenden Dioden, bestehend aus einem langgestreckten Leuchtengehäuse mit Gehäusegrundkörper und lichtdurchlässiger Abdeckung sowie elektrischen Anschlusselementen anzugeben, welche über Mittel zum lösbaren arretieren von externen Anschlusssteckern oder -buchsen verfügen.
Die Lösung der Aufgabe der Erfindung erfolgt durch eine Schaltschrankleuchte mit Leuchtmitteln auf der Basis von lichtemittierenden Dioden gemäß der Merkmalskombination nach Anspruch 1, wobei die Unteransprüche mindestens zweckmäßige Ausgestaltungen und Weiterbildungen darstellen.

Es sei an dieser Stelle darauf aufmerksam gemacht, dass die Begrifflichkeit der Schaltschrankleuchte so zu verstehen ist, dass die erfindungsgemäße Leuchte selbstverständlich nicht nur in elektrischen Schaltschränken, sondern grundsätzlich überall dort einsetzbar ist, wo die unterschiedlichsten Möglichkeiten zum Fixieren eines langgestreckten Leuchtenkörpers bestehen. Dies kann z.B. auch in Kellerräumen der Hausinstallation, in Kraftfahrzeug-Montagegruben, in Schränken zur Materialaufbewahrung und so weiter der Fall sein.

Die erfindungsgemäße Schaltschrankleuchte ist als sogenannte Weitspannungsleuchte ausgestaltet, d.h. die Leuchte kann mit einer Versorgungsspannung von 24 V Gleichspannung bis zu über 260 V Wechselspannung betrieben werden. Irgendwelche Anpassungen wie z.B. das Umschalten auf einen anderen Spannungsbereich sind nicht erforderlich.

Die erfindungsgemäße Schaltschrankleuchte geht von einem wannenartigen Gehäusegrundkörper aus. Im Gehäusegrundkörper befinden sich alle notwendigen elektrischen Elemente bezüglich der Energieversorgung für die eingesetzten lichtemittierenden Dioden einschließlich eines Trägers, der die Dioden oder Diodengruppen aufnimmt.

An der Unterseite des Gehäusegrundkörpers und/oder im Seitenwandbereich des Gehäusegrundkörpers können mehrere, beabstandete Ausnehmungen oder Rücksprünge zur lösbaren Aufnahme eines speziellen Schwenklagerträgers vorgesehen sein.

Das beschriebene Leuchtengehäuse ist aneinander reihbar ausgeführt und weist diesbezüglich an den Stirnseiten elektrische Konnektoren zum quasi Durchschleifen der Stromversorgung für die Leuchte auf.

Am Gehäuse ist darüber hinaus die Möglichkeit zum Anbringen eines Schaltmittels und/oder eines eine elektrische Funktion auslösenden Bewegungssensors vorgesehen.

Alternativ oder grundsätzlich besteht die Möglichkeit, an oder in der Unterseite des Gehäusegrundkörpers einen Permanentmagneten, insbesondere einen Permanentmagnetstreifen oder mehrere solcher Streifen vorzusehen, um dann, wenn die Leuchte als Handleuchte genutzt wird, sie schnell und sicher zeitweise an metallischen Bauteilen des entsprechenden Schaltschranks zu fixieren, bevor selbige wieder rastend mit dem Schwenklagerträger bzw. dem Fußteil verbunden wird.

Bei einer Weiterbildung der Erfindungslehre sind im Leuchtengehäuse Mittel zum netzfreien Betrieb der Leuchtmittel, insbesondere Batterien oder Akkumulatoren vorgesehen.

Über stirnseitige Anschlussmittel kann ein von der Kontur her angepasstes Steckdosenmodul und/oder Batterie- und/oder Akkumulatormodul angekoppelt werden. Dabei besteht auch die Möglichkeit, eine bereits vorhandene Schaltschrankleuchte mit diesen Funktionalitäten zu ergänzen oder nachzurüsten.

Gemäß der eingangs geschilderten Aufgabenstellung soll ein Aneinanderreihen mehrerer Leuchten nebst durchgeschleiften elektrischen Anschlüssen möglich sein, wobei beim Aneinanderreihen der Leuchten die erforderliche elektrische Berührungssicherheit gewährleistet ist.

Zusammengefasst wird bei der erfindungsgemäßen Lösung die lichtdurchlässige Abdeckung der Leuchte so weitergebildet, dass diese mindestens ein integriertes, tastenartiges Betätigungselement aufweist, welches einen nasenartigen Fortsatz umfasst. Das tastenartige Betätigungselement ist dabei Bestandteil der eigentlichen Abdeckung und wird bei einem entsprechenden Spritzgussprozess ohne zusätzlichen herstellungsseitigen Aufwand realisiert.

Der nasenartige Fortsatz des Betätigungselements ist in Richtung einer an sich bekannten Entriegelung in das Innere des Leuchtengehäuses orientiert. Diese Ausbildung des Fortsatzes geschieht über eine Abwinklung eines freien, beweglichen Endes des Betätigungselements.

Wird nun Druck auf das Betätigungselement ausgeübt, ist über den nasenartigen Fortsatz mittelbar die an sich bekannte Entriegelung zwischen einer Stecker-Buchse-Anordnung auslösbar und es kann eine Trennung der jeweiligen Stecker-Buchse-Verbindung erfolgen.

In einer bevorzugten Ausführungsform ist das tastenartige Betätigungselement als U-förmiger, elastischer, rückfedernder Einschnitt bezogen auf die Abdeckung des Leuchtengehäuses ausgebildet.

Im Bereich zwischen den seitlichen Schenkeln des U-förmigen Einschnitts entlang des Verbindungsschenkels des U-förmigen Einschnitts weist das Betätigungselement eine erhabene, in quasi Ruhezustand über die Oberfläche der umgebenden Abdeckung hervorspringende Betätigungsfläche auf. Es kann hierdurch der optimale Betätigungs- und Krafteinwirkungspunkt quasi haptisch erfasst und die gewünschte Betätigung und Entriegelung ausgelöst werden.

In einer bevorzugten Weiterbildung ist die Betätigungsfläche als Schrägfläche ausgebildet, und zwar derart, dass mit Erreichen der Entriegelungsposition die Betätigungsfläche bündig mit der Oberfläche der umgebenden Abdeckung abschließt; ansonsten entsprechend über diese umgebenden Oberfläche hervorsteht.

Die Erfindung soll nachstehend anhand eines Ausführungsbeispiels sowie unter Zuhilfenahme von Figuren näher erläutert werden.

Hierbei zeigen:
- Fig. 1: eine Längsschnittdarstellung durch eine erfindungsgemäße Schaltschrankleuchte mit Leuchtmitteln auf der Basis von lichtemittierenden Dioden und
- Fig. 2a bis c: eine Detaildarstellung des Bereichs der Schaltschrankleuchte mit Betätigungselement in der Abfolge Ruhezustand, Ausüben einer Druckkraft auf das Betätigungselement mit Einwirkung des Fortsatzes auf einen Entriegelungsmechanismus und (Fig. 2c) die Möglichkeit des jetzt vollziehbaren Trennens der Stecker-Buchse-Verbindung bei entsprechender Zugkraft gemäß Pfeilrichtung.

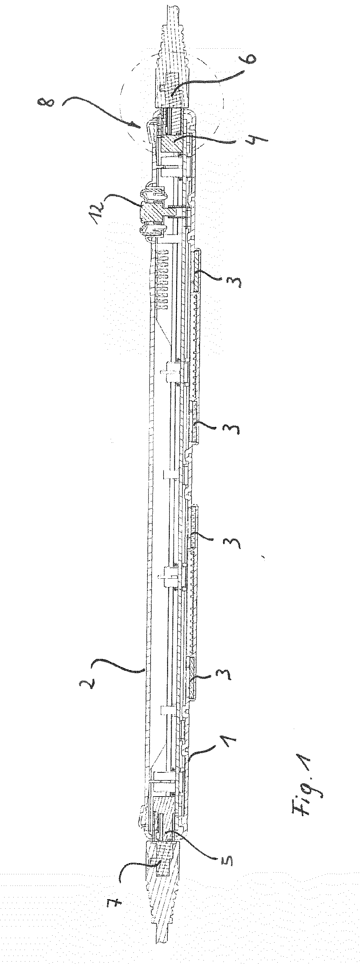

Gemäß der Darstellung nach Fig. 1 wird von einer Schaltschrankleuchte mit Leuchtmitteln auf der Basis von auf einer Platine befindlichen lichtemittierenden Dioden ausgegangen.

Die Schaltschrankleuchte besteht aus einem langgestreckten Leuchtengehäuse mit Gehäusegrundkörper 1 und lichtdurchlässiger Abdeckung 2 sowie elektrischen Anschlusselementen und am Leuchtengehäuse vorgesehenen Mitteln zur universellen Befestigung. Diese Mittel können z.B. in den Gehäusegrundkörper 1 eingelassene Permanentmagnete 3 umfassen.

Der Gehäusegrundkörper 1 ist bevorzugt wannenartig ausgebildet.

Am Gehäusegrundkörper 1 befinden sich jeweils an den gegenüberliegenden Enden der Leuchte elektrische Anschlussbuchsen oder Anschlussstecker 4; 5.

Die betreffende Anschlussbuchse 4 bzw. Anschlussstecker 5 ist über Aussparungen in den Stirnseiten des Leuchtengehäuses zugänglich. Es kann diesbezüglich ein komplementärer Stecker 6 bzw. eine komplementäre Buchse 7 zur Kontaktierung mit der internen Buchse 4 bzw. dem internen Stecker 5 in Wirkverbindung treten.

Über eine derartig ausgebildete elektrische Verbindung kann z.B. die Stromversorgung der Schaltschrankleuchte realisiert werden. Ergänzend besteht die Möglichkeit, mehrere Schaltschrankleuchten quasi in Reihenschaltung zu verknüpfen, um dann eine entsprechende Anzahl von Schaltschrankleuchten vor Ort zu betreiben.

Die lichtdurchlässige Abdeckung 2 ist so realisiert, dass selbige mit Ausnahme eines entsprechenden stirnseitigen Zugangs 3 die jeweilige im Inneren befindliche Anschlussbuchse oder Anschlussstecker umgreift.

Erfindungsgemäß weist die Abdeckung mindestens ein integriertes, tastenartiges Betätigungselement 8 auf, welches einen nasenartigen Fortsatz 9 umfasst.

Der Fortsatz 9 ist in Richtung einer Entriegelung 10 in das Innere des Leuchtengehäuses derart orientiert, dass mit Druck auf das Betätigungselement 8 mittelbar die Entriegelung 10 auslösbar ist. Infolgedessen kann eine Trennung der jeweiligen Stecker-Buchse-Verbindung 6; 4 erfolgen.

Das tastenartige Betätigungselement 8 ist in einer bevorzugten Ausführungsform als U-förmiger, elastischer, rückfedernder Einschnitt bezogen auf die Abdeckung 2 ausgebildet.

Im Bereich zwischen den seitlichen Schenkeln des U-förmigen Einschnitts und entlang des Verbindungsschenkels weist das Betätigungselement 8 eine erhabene, über die Oberfläche der umgebenden Abdeckung hervorspringende Betätigungsfläche 11 auf.

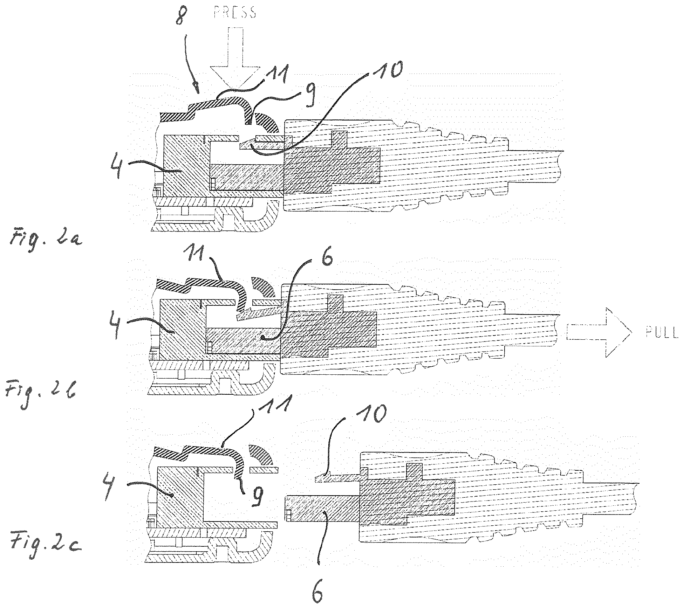

Die Betätigungsfläche ist, wie in den Fig. 2a bis 2c gezeigt, als Schrägfläche ausgebildet, welche mit Erreichen der Entriegelungsposition im Wesentlichen bündig mit der Oberfläche der umgebenden Abdeckung 2 abschließt.

Am bzw. im Leuchtengehäuse kann noch ein elektrisches Schaltmittel 12 und/oder ein elektrische Funktionen auslösender Bewegungssensor vorgesehen sein.

In einer Ausgestaltung der Erfindung besteht die Möglichkeit, im Leuchtengehäuse Mittel zum netzfreien Betrieb der Leuchtmittel vorzusehen, dies können z.B. Akkumulatoren sein.

Über die stirnseitigen Stecker oder Buchsen 4; 5 kann ein Steckdosenmodul und/oder ein externes Batterie- oder Akkumulatormodul angekoppelt werden.

## Patentansprüche

1. Schaltschrankleuchte mit Leuchtmitteln auf der Basis von lichtemittierenden Dioden, bestehend aus einem langgestreckten Leuchtengehäuse mit Gehäusegrundkörper(1) und lichtdurchlässiger Abdeckung (2) sowie elektrischen Anschlusselementen und am Leuchtengehäuse vorgesehenen Mitteln zur universellen Befestigung, wobei der Gehäusegrundkörper (1) wannenartig ausgebildet ist und elektrische Anschlussbuchsen oder Anschlussstecker(4; 5) aufnimmt, welche jeweils über die Stirnseiten des Leuchtengehäuses für eine komplementäre externe Buchse oder einen externen Stecker zugänglich sind, sowie weiterhin die Abdeckung (2) mit Ausnahme eines stirnseitigen Zugangsbereichs die jeweilige Anschlussbuchse oder den Anschlussstecker (4; 5) umgreift,
**dadurch gekennzeichnet, dass**
die Abdeckung (2) mindestens ein integriertes, tastenartiges Betätigungselement (8) aufweist, welches einen nasenartigen Fortsatz (9) umfasst, weiterhin der nasenartige Fortsatz (9) in Richtung einer Entriegelung (10) in das Innere des Leuchtengehäuses orientiert ist, derart, dass mit Druck auf das Betätigungselement (8) mittelbar die Entriegelung (10) auslösbar ist und eine Trennung der jeweiligen Stecker-Buchse-Verbindung erfolgen kann.

2. Schaltschrankleuchte nach Anspruch 1,
**dadurch gekennzeichnet, dass**
das tastenartige Betätigungselement (8) als U-förmiger, elastischer, rückfedernder Einschnitt bezogen auf die Abdeckung (2) ausgebildet ist.

3. Schaltschrankleuchte nach Anspruch 2,
**dadurch gekennzeichnet, dass**
im Bereich zwischen den seitlichen Schenkeln des U-förmigen Einschnitts entlang des Verbindungsschenkels dieses Einschnitts das Betätigungselement (8) eine erhabene, über die Oberfläche der umgebenden Abdeckung hervorspringende Betätigungsfläche (11) aufweist.

4. Schaltschrankleuchte nach Anspruch 3,
**dadurch gekennzeichnet, dass**
die Betätigungsfläche (11) als Schrägfläche ausgebildet ist, welche mit Erreichen der Entriegelungsposition im Wesentlichen bündig mit der Oberfläche der umgebenden Abdeckung abschließt.

5. Schaltschrankleuchte nach einem der vorangegangenen Ansprüche,
**dadurch gekennzeichnet, dass**
das Leuchtengehäuse aneinander reihbar ausgebildet ist.

6. Schaltschrankleuchte nach einem der vorangegangenen Ansprüche,
**dadurch gekennzeichnet, dass**
am Leuchtengehäuse ein elektrisches Schaltmittel (12) und/oder ein elektrische Funktionen auslösender Bewegungssensor vorgesehen ist.

7. Schaltschrankleuchte nach einem der vorangegangenen Ansprüche,
**dadurch gekennzeichnet, dass**
an oder in der Unterseite des Gehäusegrundkörpers mindestens ein Permanentmagnetstreifen (3) vorgesehen ist.

8. Schaltschrankleuchte nach einem der vorangegangenen Ansprüche,
**dadurch gekennzeichnet, dass**
im Leuchtengehäuse Mittel zum netzfreien Betrieb der Leuchtmittel vorgesehen sind.

9. Schaltschrankleuchte nach Anspruch 8,
**dadurch gekennzeichnet, dass**
über die stirnseitigen Stecker oder Buchsen ein Steckdosenmodul und/oder ein Batterie- oder Akkumulatormodul ankoppelbar ist.

## Claims

1. Control cabinet light with illuminating means based on light emitting diodes, composed of an elongate light housing having a housing base body (1) and a translucent cover (2), as well as electrical connection elements and means for universal fastening provided on the light housing, wherein the housing base body (1) is formed to be trough-like and receives electrical connection outlets or connection plugs (4; 5), which are each accessible for a complementary external outlet or external plug via the front sides of the light housing, as well as furthermore the cover (2) encompasses the respective connection outlet or the connection plug (4; 5) with the exception of a front-side access area,
**characterized in that**
the cover (2) has at least one integrated key-like actuating element (8) which comprises a lug-like protrusion (9), furthermore the lug-like protrusion (9) is oriented toward an unlocking device (10) into the interior of the light housing in such a way that by means of pressure upon the actuating element (8), the unlocking device (10) can be triggered indirectly and a separation of the respective plug and outlet connection can be performed.

2. Control cabinet light according to claim 1,
**characterized in that**
the key-like actuating element (8) is formed as a U-shaped, elastic, resilient notch with respect to the cover.

3. Control cabinet light according to claim 1,
**characterized in that**
in the area between the lateral legs of the U-shaped notch, along the connecting leg of said notch, the actuating element (8) has a raised actuating surface (11) projecting beyond the upper surface of the surrounding cover.

4. Control cabinet light according to claim 3,
**characterized in that**
the actuating surface (11) is formed as an inclined surface which is substantially flush with the upper surface of the surrounding cover when the unlocking position is reached.

5. Control cabinet light according to anyone of the preceding claims,
**characterized in that**
the light housing is formed to be able to be lined up with other light housings.

6. Control cabinet light according to anyone of the preceding claims,
**characterized in that**
an electrical switching means (12) and/or a motion sensor triggering electrical functions is provided on the light housing.

7. Control cabinet light according to anyone of the preceding claims,
**characterized in that**
at least one permanent magnet strip (3) is provided on or in the underside of the housing base body.

8. Control cabinet light according to anyone of the preceding claims,
**characterized in that**
means for the off-grid operation of the illuminating means are provided in the light housing.

9. Control cabinet light according to claim 8,
**characterized in that**
a socket module and/or a battery module or accumulator module can be connected via the front-side plugs or outlets.

## Revendications

1. Éclairage d'armoire électrique ayant des moyens d'éclairage à base de diodes électroluminescentes, constitué par un boîtier d'éclairage étiré en longueur ayant un corps de base de boîtier (1) et un recouvrement (2) translucide ainsi que des éléments de connexion électrique et des moyens de fixation universelle prévus sur le boîtier d'éclairage,
dans lequel
le corps de base de boîtier (1) est réalisé en forme de cuve et reçoit des fiches électriques femelles ou des fiches électriques mâles (4 ; 5) qui sont accessibles par des faces frontales du boîtier d'éclairage pour une fiche femelle externe complémentaire ou pour une fiche mâle externe complémentaire, et en outre le recouvrement (2) entoure la fiche femelle respective ou la fiche mâle respective (4 ; 5), à l'exception d'une zone d'accès côté frontal,
**caractérisé en ce que**
le recouvrement (2) comprend au moins un élément d'actionnement (8) intégré en forme de touche qui comprend un prolongement en forme d'ergot (9), et le prolongement en forme d'ergot (9) est orienté en direction d'un déverrouillage (10) vers l'intérieur du boîtier d'éclairage, de telle sorte que par une pression exercée sur l'élément d'actionnement (8) le déverrouillage (10) est indirectement déclenchable et il peut y avoir une séparation de la liaison respective fiche mâle - fiche femelle.

2. Éclairage d'armoire électrique selon la revendication 1,
**caractérisé en ce que**
l'élément d'actionnement (8) en forme de touche est réalisé sous la forme d'une entaille en forme de U, élastique, à effet ressort par rapport au recouvrement (2).

3. Éclairage d'armoire électrique selon la revendication 2,
**caractérisé en ce que**
dans la zone entre les branches latérales de l'entaille en forme de U, le long de la branche de liaison de cette entaille, l'élément d'actionnement (8) présente une surface d'actionnement (11) surélevée, faisant saillie au-delà de la surface du recouvrement entourant.

4. Éclairage d'armoire électrique selon la revendication 3,
**caractérisé en ce que**
la surface d'actionnement (11) est réalisée sous forme de surface oblique qui se termine sensiblement en affleurement avec la surface du recouvrement entourant, une fois que la position de déverrouillage est atteinte.

5. Éclairage d'armoire électrique selon l'une des revendications précédentes,
**caractérisé en ce que**
le boîtier d'éclairage est réalisé de manière à pouvoir être mis en rangée.

6. Éclairage d'armoire électrique selon l'une des revendications précédentes,
**caractérisé en ce que**
le moyen de commutation électrique (12) et/ou un capteur de mouvement déclenchant des fonctions électriques est prévu sur le boîtier d'éclairage.

7. Éclairage d'armoire électrique selon l'une des revendications précédentes,
**caractérisé en ce que**
au moins un ruban magnétique permanent (3) est prévu sur ou dans la face inférieure du corps de base de boîtier.

8. Éclairage d'armoire électrique selon l'une des revendications précédentes,
**caractérisé en ce que**
dans le boîtier d'éclairage, il est prévu des moyens pour le fonctionnement sans réseau des moyens d'éclairage.

9. Éclairage d'armoire électrique selon la revendication 8,
**caractérisé en ce que**
un module de prise électrique et/ou un module de batterie ou d'accumulateur peut être accouplé via les fiches mâles ou femelles côté frontal.
